# EUROPEAN PATENT APPLICATION

(11) **EP 4 406 411 A1**
(43) Date of publication of application: **31.07.2024**
(21) Application number: 22872731.9
(22) Date of filing: 09.09.2022
(51) Int. Cl.: A01N 1/02

(54) **ORGAN PLACEMENT PLATFORM, ORGAN STORAGE CONTAINER, AND ORGAN PLACEMENT METHOD**

(30) Priority: 22.09.2021 JP 2021154043
(71) Applicant: SCREEN Holdings Co., Ltd., Kyoto-shi, Kyoto 602-8585 (JP)
(72) Inventor: KASAMATSU Hiroo, Kyoto-shi, Kyoto 602-8585 (JP); TORAI Shinji, Kyoto-shi, Kyoto 602-8585 (JP); YOSHIMOTO Syuhei, Kyoto-shi, Kyoto 602-8585 (JP)
(74) Representative: Goddar, Heinz J.
(86) International application number: PCT/JP2022/033845
(87) International publication number: WO 2023/047976

(57) **Abstract**

An organ placement base (20) includes a base (21) of a cylindrical shape extending vertically, and a sheet (22) made of a soft resin and covering an opening at the top of the base (21). The sheet (22) has a drain hole (220) that vertically penetrates the sheet. Since the sheet (22) is deformed along the organ, it is possible to reduce the load on an isolated organ when the organ is placed on the organ placement base. It is also possible to drain a liquid accumulated on the sheet (22) downward from the drain hole. If a blood vessel located in a lower portion of the organ is inserted into the drain hole, the load on the blood vessel can be reduced.

## Description

### [Technical Field]

The present invention relates to an organ placement base for placing an organ in vitro, an organ preservation container, and an organ placement method.

### [Background Art]

In organ transplant operations such as liver transplants, an organ removed from the donor is temporarily preserved in vitro until the organ is transplanted into the recipient. At this time, the organ is stored in an organ preservation container for preservation or transport. Examples of organ preservation methods include cooling preservation in which an organ is preserved in a preservation solution and perfusion preservation in which blood vessels in an organ are perfused with a liquid such as a physiological saline.

For example, Patent Literature (PTL) 1 discloses a conventional device for preserving an organ removed from the donor in vitro.

### [Citation List]

### [Patent Literature]

[PTL 1] Japanese Patent Application Laid-Open No. 2012-92114

### [Summary of Invention]

### [Technical Problem]

During preservation or transport of an organ, affected forces are likely to be applied to the organ. For example, in the organ chamber disclosed in PTL 1 for storing an organ, the organ is placed on a flat organ supporting surface made of a porous or mesh material. However, when an organ of a three-dimensional shape is placed on a flat surface, the area of contact between the organ and the placement surface may be pressed under the weight of the organ, and accordingly some load may be applied to the organ or a bloodstream into the organ may be obstructed.

The present invention has been made in light of such circumstances, and it is an object of the present invention to provide a technique for reducing the load on an organ when the organ is placed in vitro.

### [Solution to Problem]

To solve the problem described above, a first aspect of the present application is an organ placement base for placing an organ in vitro. The organ placement base includes a base of a cylindrical shape extending vertically, and a sheet made of a soft resin and covering an opening at a top of the base. The sheet has a drain hole that vertically penetrates the sheet.

A second aspect of the present application is the organ placement base according to the first aspect, in which a value measured for the sheet by a type A durometer according to JIS K 6253 is less than or equal to A 70.

A third aspect of the present application is the organ placement base according to the first aspect, in which the sheet sags 10 mm or more when a liver with a weight of 700 g is placed on a center of the sheet.

A fourth aspect of the present application is the organ placement base according to any one of the first to third aspects that further includes a plurality of drain holes, each being the drain hole. The plurality of drain holes are arranged at a predetermined interval in a specific region of the sheet.

A fifth aspect of the present application is the organ placement base according to the fourth aspect, in which the sheet has a length of greater than or equal to 250 mm in a longitudinal direction, and the specific region is arranged on one side in the longitudinal direction of the center of the sheet.

A sixth aspect of the present application is the organ placement base according to the fourth or fifth aspect, in which out of the plurality of drain holes, five drain holes are arranged in the shape of a cross in the specific region.

A seventh aspect of the present application is the organ placement base according to the fourth or fifth aspect, in which out of the plurality of drain holes, nine drain holes are arranged at a regular interval in a matrix with three rows and three columns in the specific region.

An eighth aspect of the present application is an organ preservation container that includes the organ placement base according to any one of the first to seventh aspects, and a container body of a closed-end cylindrical shape in which the organ placement base is arranged.

A ninth aspect of the present application is an organ placement method for placing an organ removed from a body on an organ placement base. The organ placement base includes a base and a sheet, the base being of a cylindrical shape extending vertically, the sheet being made of a soft resin and covering an opening at a top of the base. The organ placement method includes a) arranging the organ placement base in an organ preservation container, and b) placing the organ on the organ placement base, wherein the sheet has a drain hole that vertically penetrates the sheet.

A tenth aspect of the present application is the organ placement method according to the ninth aspect, in which the operation b) includes inserting a blood vessel of the organ into the drain hole.

An eleventh aspect of the present application is the organ placement method according to the ninth aspect, in which the sheet has a plurality of drain holes arranged at a predetermined interval and each being the drain hole. The organ placement method further includes c) before the operation b), removing a portion of the sheet that is located between adjacent drain holes out of the plurality of drain holes to form an enlarged drain hole that is larger than each of the plurality of drain holes, wherein the operation b) includes inserting a blood vessel of the organ into the enlarged drain hole.

### [Advantageous Effects of Invention]

According to the first to eighth aspects of the present application, the load on the organ can be reduced. Besides, the liquid accumulated on the sheet can be drained down from the drain hole. If a blood vessel located in the lower portion of the organ is inserted in the drain hole, the load on the blood vessel can reduced.

In particular, according to the fourth aspect of the present application, since the plurality of drain holes are provided in the region where a blood vessel to which a liquid is drained is arranged, efficient drainage of the liquid to under the sheet becomes possible. Besides, the drain holes may be connected together to form an enlarged drain hole. This allows a blood vessel located in the lower portion of the organ to be easily inserted into the drain hole.

In particular, according to the fifth aspect of the present application, in the case where the organ placed on the organ placement base is a liver, the suprahepatic aorta can be readily arranged in the region where the plurality of drain holes are provided. This allows efficient drainage of the liquid to under the sheet.

In particular, according to the sixth or seventh aspect, in the case of enlarging the drain holes, it is possible to easily arrange the shape of the drain holes.

According to the ninth aspect of the present application, the load on the organ can be reduced. Besides, the liquid accumulated on the sheet can be drained downward from the hole.

According to the tenth aspect of the present application, the load on the blood vessel can be reduced.

According to the eleventh aspect of the present application, the enlarged drain hole facilitates the insertion of a blood vessel therein.

### [Brief Description of Drawings]

Fig. 1 is a longitudinal section view of an organ preservation container.
Fig. 2 is a top view of an organ placement base.
Fig. 3 is an exploded perspective view of the organ placement base.
Fig. 4 is a top view of the organ placement base after drain holes are enlarged.
Fig. 5 is a flowchart showing a procedure of an organ transplant operation.
Fig. 6 is a sectional view of an organ preservation container according to a first variation.
Fig. 7 is a sectional view of an organ preservation container according to a second variation.

### [Description of Embodiment]

Hereinafter, an embodiment of the present invention will be described with reference to the drawings.

In the present application, the "donor" and the "recipient" may be humans, or may be non-human animals. That is, the "organ" according to the present application may be a human organ, or may be an organ of a non-human animal. The non-human animal may be a rodent such as a mouse or a rat, an ungulate such as a pig, a goat, or sheep, a non-human primate such as a chimpanzee, or any other different non-human mammal, or may also be a non-mammalian animal.

### 1. Configuration of Organ Preservation Container

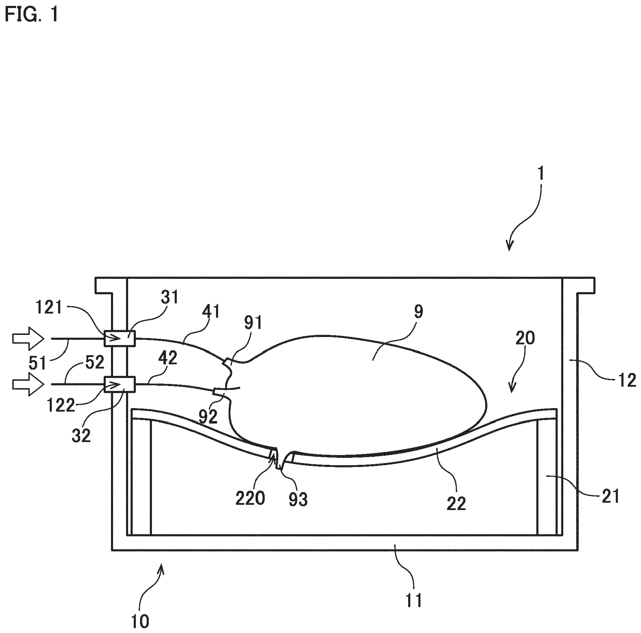

Fig. 1 is a longitudinal sectional view of an organ preservation container 1 that includes an organ placement base 20 according to an embodiment. The organ preservation container 1 is a container for use in an organ transplant operation to temporarily preserve an organ removed from the donor in vitro until the organ is transplanted into the recipient. Examples of the organ to be preserved in the organ preservation container 1 include a liver, a kidney, a heart, and a pancreas. It is, however, noted that the organ to be preserved in the organ preservation container 1 may be any organ other than those listed above, or may be part of any organ.

Hereinafter, an exemplary case is described in which a liver 9 is preserved in the organ preservation container 1 while a liquid is supplied to two blood vessels (a hepatic artery 91 and a portal vein 92) of the liver 9.

As shown in Fig. 1, the organ preservation container 1 according to the present embodiment includes a container body 10 of a closed-end cylindrical shape, the organ placement base 20, a first joint 31, a second joint 32, a first tube 41, and a second tube 42.

The container body 10 is a so-called reactor capable of storing an isolated organ therein. The container body 10 has a flat bottom plate 11 and a cylindrical sidewall 12. The bottom plate 11 expands along a horizontal plane. The sidewall 12 extends upward from the outer peripheral edge of the bottom plate 11. In the present embodiment, the bottom plate 11 has a rectangular shape when viewed from above. Thus, the sidewall 12 has a square cylindrical shape. It is, however, noted that the shapes of the bottom plate 11 and the sidewall 12 when viewed from above may be any other shape such as a circular shape or an elliptical shape.

The sidewall 12 has a first through hole 121 and a second through hole 122. With no tube connected thereto, each of the first and second through holes 121 and 122 serves as a hole that communicates a space inside the sidewall 12 to a space outside the sidewall 12.

The organ placement base 20 is a base for placing an organ inside or outside the organ preservation container 1. A detailed configuration of the organ placement base 20 will be described later.

The first through hole 121 is provided with the first joint 31. The second through hole 122 is provided with the second joint 32. Each of the first and second joints 31 and 32 is connectable to a line from both inside and outside the sidewall 12. Specifically, the first tube 41 is connectable to the first joint 31 from the inner side of the container body 10. The second tube 42 is connectable to the second joint 32 from the inner side of the container body 10.

For example, the portions of the first and second joints 31 and 32 that come in contact with lines may be made of silicone rubber having elasticity. This provides tight contact between the joints 31 and 32 and the lines and suppresses leakage of a liquid from the areas of contact.

The first tube 41 and the second tube 42 are tubes for supplying a liquid such as physiological saline to the organ stored in the container body 10 or collecting a liquid drained out of the organ. The first and second tubes 41 and 42 have flexibility.

In the present embodiment, the first and second tubes 41 and 42 are both used to supply a liquid to the liver 9 in order to supply the liquid to the hepatic artery 91 or the portal vein 92 of the liver 9.

One end of the first tube 41 is connected to the first joint 31 from the inner side of the container body 10. The other end of the first tube 41 is inserted into the hepatic artery 91 of the liver 9. One end of the second tube 42 is connected to the second joint 32 from the inner side of the container body 10. The other end of the second tube 42 is inserted into the portal vein 92 of the liver 9.

As shown in Fig. 1, outside the container body 10, the first and second joints 31 and 32 are connected respectively to the downstream ends of supplying lines 51 and 52 for supplying liquids. The upstream ends of the supplying lines 51 and 52 are each connected to a reservoir (not shown) that serves as a supplying source. The reservoir stores a liquid that is to be supplied to the liver 9. The reservoir may be a drip bag (pouch bag) or may be a tank for storing a liquid. Examples of the liquid supplied from the reservoir include physiological saline, an ETK solution, an HTK solution, and an UW solution.

The liquid is supplied from the reservoir through the supplying line 51, the first joint 31, and the first tube 41 to the hepatic artery 91 of the liver 9. The liquid is also supplied from the reservoir through the supplying line 52, the second joint 32, and the second tube 42 to the portal vein 92 of the liver 9. Note that the supplying lines 51 and 52 may be connected to different reservoirs, or may be connected to the same reservoir.

In this way, the liquid flows through blood vessels in the liver 9, and blood clots or waste products are removed from inside the liver 9. By passing the liquid through the blood vessels in the liver 9, it is possible to preserve the liver 9 while retarding deterioration of the liver 9. Note that the flow of the liquid may be accelerated by providing a pump in each path of the supplying lines 51 and 52. At this time, the pump in the supplying line 51 and the output of the pump in the supplying line 52 may produce different outputs in order to differentiate the flow rate of the liquid supplied to the hepatic artery 91 from the flow rate of the liquid supplied to the portal vein 92.

The liquid supplied to the liver 9, after having passed through the blood vessels in the liver 9, is drained from the suprahepatic inferior vena cava (SH-IVC) 93 or the infrahepatic inferior vena cava (IH-IVC) (not shown) and accumulated on the bottom of the container body 10. Although, in the present embodiment, there is no mechanism for collecting a liquid from inside the container body 10, the container body 10 may have a drain port for collecting a liquid in the bottom plate 11 or in the vicinity of the lower end portion of the sidewall 12. In that case, the drain port may be connected to a drain tube or a drain collecting container. As another alternative, the liquid drained from the drain port may be refluxed through the drain port to the reservoir.

### 2. Configuration of Organ Placement Base

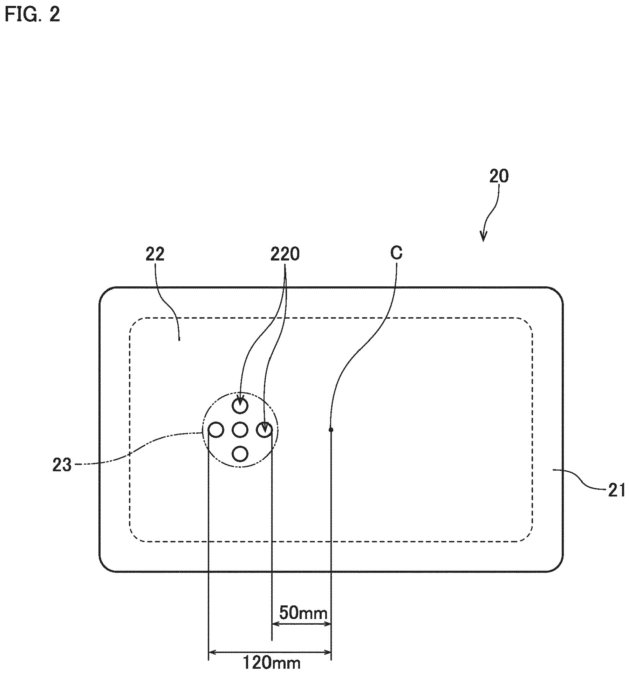

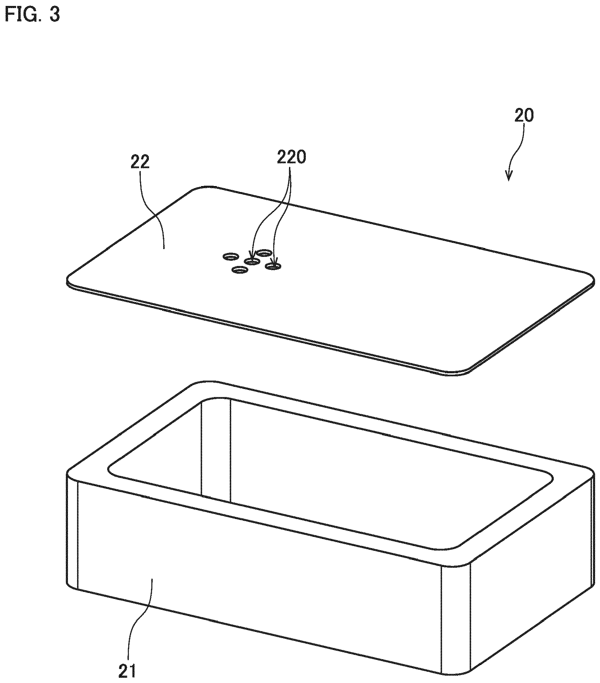

Next, a configuration of the organ placement base 20 will be described with reference to Figs. 1, 2, and 3. Fig. 2 is a top view of the organ placement base 20. Fig. 3 is an exploded perspective view of the organ placement base 20.

The organ placement base 20 is a base for placing an organ in vitro. As shown in Figs. 1 to 3, the organ placement base 20 includes a base 21 and a sheet 22.

The base 21 has a cylindrical shape extending vertically. As shown in Figs. 2 and 3, the base 21 according to the present embodiment has a square cylindrical shape. The outer peripheral shape of the base 21 is slightly smaller than the inner periphery of the sidewall 12 of the container body 10. The base 21 is inserted into the space inside the sidewall 12 of the container body 10 with almost no clearance. By so doing, it is possible to suppress horizontal displacements of the organ placement base 20 relative to the container body 10 without fixedly attaching the organ placement base 20 to the container body 10 when the organ placement base 20 is installed in the container body 10.

The sheet 22 covers an opening at the top of the base 21. The sheet 22 is made of a soft resin. In the present embodiment, the sheet 22 is made of a silicon resin. With no organ placed thereon, the sheet 22 expands in the shape of a thin plate along a horizontal plane. The thickness of the sheet 22 in the up-down direction is smaller than the thickness of the base 21 in the horizontal direction.

Although the base 21 and the sheet 22 are illustrated like different members in Figs. 1 and 3, the base 21 and the sheet 22 according to the present embodiment are integrally formed of the same material. This prevents the sheet 22 from coming off the base 21 even if the sheet 22 is exposed at a high temperature in an autoclave. It is, however, noted that the base 21 and the sheet 22 may be different members and fixedly attached to each other by bonding, welding, or any other method.

The sheet 22 has a plurality of drain holes 220 that vertically penetrate the sheet 22. Accordingly, a liquid drained out of the organ to the sheet 22 can be drained to the space under the sheet 22.

The sheet 22 is made of a flexible material. Thus, when the organ is placed on the sheet 22, the sheet 22 sags down as schematically shown in Fig. 1. As described above, when an organ having a three-dimensional shape is placed on a flat surface, the area of contact between the organ and the placement surface may be pressed under the weight of the organ, and accordingly some load may be applied to the organ or a bloodstream into the organ may be obstructed. In contrast, the sheet 22 that sags along the three-dimensional shape of the organ reduces the load on the organ.

Similarly, in the case where a mesh fabric made of fiber such as cotton is used as a base material that sags easily, the organ may be cut in by the fiber and may have surface flaws or may become damaged. In contrast, the use of the sheet 22 made of a soft resin prevents the organ from being damaged due to fiber.

The base 21 holds the sheet 22 at a fixed height from the bottom plate 11 of the container body 10. This reduces the possibility that the sheet 22 may come in contact with the bottom plate 11 when the sheet 22 sags down under the weight of the organ. Accordingly, it is possible to prevent the organ from being pressed by the flat surface.

In consideration of the load to be placed on the organ, the value measured for the sheet 22 by a type A durometer according to JIS K 6253 may preferably be less than or equal to A 70. The base 21 may preferably have a height of 20 mm to 60 mm.

In the present embodiment, the value measured for the sheet 22 by a type A durometer according to JIS K 6253 is in the neighborhood of A 50. In consideration of the load to be placed on the organ and the amount of deformation of the sheet 22, it is more preferable that the value measured for the sheet 22 by a type A durometer according to JIS K 6253 may be higher than or equal to A 40 and lower than or equal to A 60.

In the present embodiment, the base 21 has a height of 45 mm. When a liver with a weight of 700 g to 1500 g is placed on the sheet 22 of the present embodiment, the sheet 22 sags down approximately 10 mm to 30 mm. At this time, the liver placed on the sheet 22 is not pressed by a flat surface.

Next, the size and arrangement of the drain holes 220 provided in the sheet 22 will be described with reference to Fig. 2. The drain holes 220 each have a circular shape with a diameter of 15 mm. The drain holes 220 may preferably have a no-corner shape such as a circular shape or an elliptical shape in order to avoid brakeage of the sheet 22 from the edges of the drain holes 220 or extension of the sheet 22 from the drain holes 220 more than necessary.

As shown in Fig. 2, the sheet 22 has five drain holes 220. The five drain holes 220 are arranged at a predetermined interval in the shape of a cross in a specific region 23 of the sheet 22. In Fig. 2, the region 23 is enclosed by a chain double-dashed line.

The organ placement base 20 according to the present embodiment is designed such that the size of the organ placement base 20 and the arrangement of the drain holes 220 become suited to placing the liver 9. Thus, the length in the longitudinal direction of the sheet 22 is greater than or equal to 250 mm. Specifically, the length in the longitudinal direction of the sheet 22 is 260 mm.

The region 23 is arranged on one side in the longitudinal direction of a center position C of the sheet 22 in the longitudinal direction of the sheet 22. Specifically, it is desirable that the drain holes 220 are arranged within the range of 30 mm to 70 mm in the longitudinal direction from the center position C. With the drain holes arranged in this way, when the liver 9 is placed with the suprahepatic inferior vena cava (SH-IVC) 93 located in the lower portion of the liver 9, the suprahepatic inferior vena cava 93 is arranged in the region 23 where the drain holes 220 are arranged. Accordingly, the liquid drained from the suprahepatic inferior vena cava 93 is efficiently drained to under the sheet 22 through the drain holes 220 without being accumulated on the sheet 22.

As shown in Fig. 1, the suprahepatic inferior vena cava 93 of the liver 9 may be inserted into the drain holes 220 so as to protrude downward of the sheet 22. By so doing, it is possible to reduce the possibility that the suprahepatic inferior vena cava 93 may be pressed between the liver 9 and the sheet 22 under the weight of the liver 9 itself. In this way, when a blood vessel on the bottom side (on the side of the sheet 22) of the liver placed on the sheet 22 is inserted into the drain holes 220, it is possible to reduce the possibility that the blood vessel may be pressed and damaged. That is, the load on the blood vessel can be reduced.

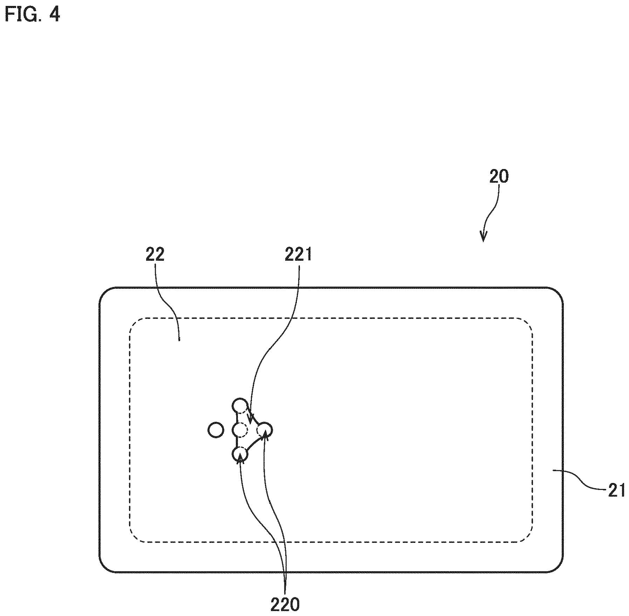

Fig. 4 is a top view of the organ placement base 20 after the drain holes 220 are enlarged. As shown in Fig. 4, when a blood vessel in the organ placed on the sheet 22 is inserted into the drain holes 220, a plurality of drain holes 220 may be connected together to form an enlarged drain hole 221 in accordance with the position and size of the blood vessel.

Since the sheet 22 can be easily cut with scissors, the operator may cut several portions of the sheet that are located between adjacent drain holes 220 in accordance with the position and size of the blood vessel to be inserted, so as to connect a plurality of drain holes 220 together to form an enlarged drain hole 221 that is larger than each of the drain holes 220. In the example in Fig. 4, four drain holes 220 are connected together to form the enlarged drain hole 221. Note that the enlarged drain hole 221 may also be formed by connecting two or three drain holes 220 together or by connecting all of the five drain holes 220 together.

If several notches are made in the sheet with scissors in order to simply expand the drain holes 220, instead of cutting portions of the sheet that are located between drain holes 220, the sheet 22 may be torn badly by the notches. If the plurality of drain holes 220 are arranged at a predetermined interval in the specific region 23 as in the present embodiment, the enlarged drain hole 221 can be formed easily by cutting portions of the sheet 22 that are located between the drain holes 220.

Besides, the shape of the enlarged drain hole 221 can be easily arranged by arranging the five drain holes 220 in the shape of a cross as in the present embodiment.

### 3. Procedure for Organ Transplantation

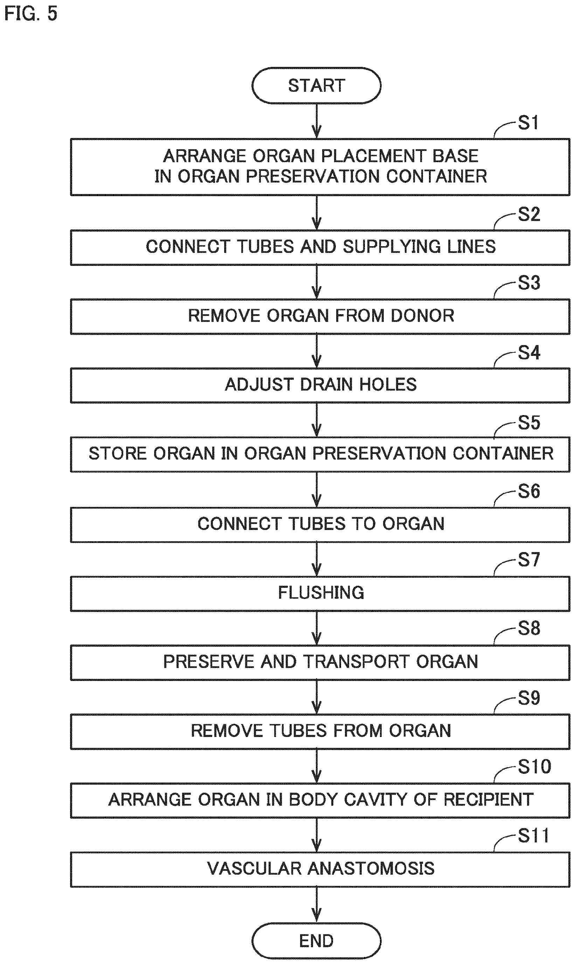

Next is a description of the procedure of an organ transplant operation of the liver 9 using the organ preservation container 1. Fig. 5 is a flowchart showing the procedure of an organ transplant operation. Hereinafter, people who conduct work for the organ transplant operation are referred to as "operators." Examples of the operators include doctors who work as surgery operators and nurses who assist the doctors.

In the organ transplant operation, the organ preservation container 1 is prepared in advance. An operator arranges the organ placement base 20 in the organ preservation container 1 (step S 1).

Then, the operator connects the first tube 41 to the first joint 31 of the organ preservation container 1 and the second tube 42 to the second joint 32. The operator also connects the supplying line 51 to the first joint 31 and the supplying line 52 to the second joint 32 from the outside of the container body 10 (step S2). The supplying line 51 is connected in a flow path to the first tube 41 via the first through hole 121. The supplying line 52 is connected in a flow path to the second tube 42 via the second through hole 122.

When the preparation for the organ preservation container 1 is completed, the operator removes the liver 9 from the donor (step S3). Specifically, the operator dissects the abdominal part of the donor and cuts each blood vessel of the liver 9 in the body cavity of the donor. Then, the operator holds and takes out the liver 9 from the inside of the body cavity of the donor with both hands.

Following this, the operator checks the position of the blood vessel located on the lower side of the liver 9 (on the side of the organ placement base 20) (in the example in Fig. 1, the suprahepatic inferior vena cava 93) and adjusts the drain holes 220 (step S4). Specifically, in the case where the blood vessel located on the lower side is insertable into any of the drain holes 220, the blood vessel is arranged in a position in which the blood vessel is inserted into the drain hole 220. If there is a need to enlarge the drain holes 220 in consideration of the size and position of the blood vessel located on the lower side, the drain holes 220 are enlarged to form an enlarged drain hole 221.

Note that the adjustment of the drain holes 220 may be conducted before the removal of the liver 9. In that case, step 4 of adjusting the drain holes 220 is performed before step S3.

Then, the operator places the liver 9 on the organ placement base 20 and stores the liver 9 in the organ preservation container 1 (step S5). Thereafter, the operator inserts the other end of the first tube 41 into the hepatic artery 91 of the liver 9 and the other end of the second tube 42 into the portal vein 92 of the liver 9. Accordingly, the first tube 41 is connected to the hepatic artery 91 of the liver 9, and the second tube 42 is connected to the portal vein 92 of the liver 9 (step S6).

When the connection of the first and second tubes 41 and 42 to the liver 9 is completed, the operator performs flushing for cleaning the blood vessels in the liver 9 (step S7). Specifically, the operator opens clamps provided in the paths of the supplying lines 51 and 52. This allows a liquid to be supplied from the reservoir into the liver 9 through the supplying line 51, the first joint 31, the first tube 41, and the hepatic artery 91. This also allows a liquid to be supplied from the reservoir into the liver 9 through the supplying line 52, the second joint 32, the second tube 42, and the portal vein 92. Then, the liquids are supplied to each blood vessel in the liver 9. The supplied liquids are circulated throughout the liver 9 and then drained from the suprahepatic inferior vena cava 93 and the infrahepatic inferior vena cava. Accordingly, blood clots or waste products are washed away from the blood vessels in the liver 9.

Thereafter, the operator preserves the liver 9 by a simple cooling preservation method or a perfusion preservation method. In the case of using the simple cooling preservation method, a low-temperature (e.g., 4°C) liquid such as physiological saline is stored in the container body 10, and the liver 9 is immersed in this liquid. In the present embodiment in which the perfusion preservation method is used for preservation, the liquid continues to be supplied to the liver 9. That is, the liquid is supplied from the reservoir to the blood vessels in the liver 9 through the supplying lines 51 and 52, the first and second joints 31 and 32, and the first and second tubes 41 and 42. Then, the liquid is drained out from opened blood vessels of the liver 9. The operator transports the organ preservation container 1 with the liver 9 stored therein, to the recipient while preserving the liver 9 by the above method (step S8).

When the liver 9 has arrived at the recipient, an operator removes the first tube 41 from the hepatic artery 91 of the liver 9 and the second tube 42 from the portal vein (step S9). Then, the operator takes the liver 9 out of the organ preservation container 1 and arranges the liver 9 in the body cavity of the recipient (step S10). Then, the operator anastomoses each blood vessel of the liver 9 to a corresponding blood vessel of the recipient (step S11). Thereafter, the operator closes the abdominal part of the recipient.

As described above, the use of the organ preservation container 1 allows the first and second tubes 41 and 42 connected to the organ to be arranged in advance inside the container body 10. This expedites the work of storing the organ removed from the donor in the organ preservation container 1 and connecting the first and second tubes 41 and 42 to the blood vessels of the organ in the organ transplant operation. Accordingly, it is possible to preserve the organ while retarding deterioration of the organ.

In this organ transplant operation, the load on the organ can be reduced by placing the organ on the sheet of a soft resin of the organ placement base 20, instead of simply placing the organ inside the organ preservation container 1. This reduces the load on the organ. In particular, the transport of the organ removed from the donor to the recipient may take a long time or may transmit vibrations to the organ preservation container 1. In such cases, in particular, it is possible to reduce the load on the organ.

### 4. Variations

Although one embodiment of the present invention has been described thus far, the present invention is not intended to be limited to the above-described embodiment.

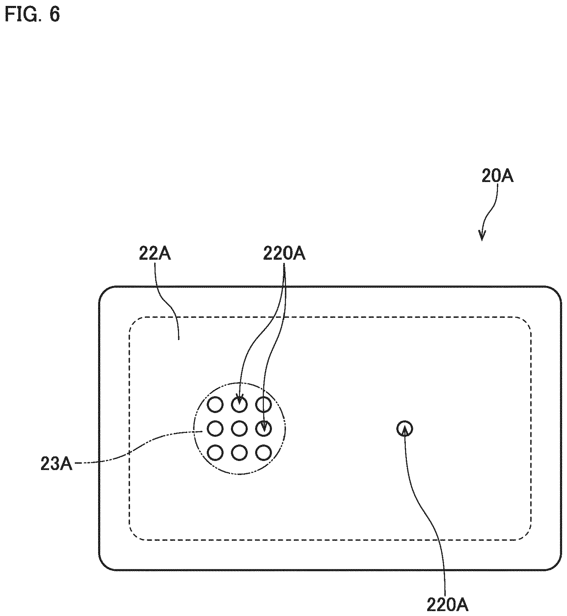

Fig. 6 is a top view of an organ placement base 20A according to a variation. In the example shown in Fig. 6, the organ placement base 20A includes a sheet 22A having ten drain holes 220A. Out of the ten drain holes 220A, nine drain holes 220A are arranged in a specific region 23A on one side in the longitudinal direction of the center of the sheet 22. The remaining one drain hole 220A is arranged on the other side in the longitudinal direction of the center of the sheet 22A. In this way, drain holes 220A may be arranged in a region other than the specific region 23A.

As shown in Fig. 6, the nine drain holes 220A in the region 23A are arranged at regular intervals in a matrix with three rows and three columns. By arranging the drain holes 220A in this way, it becomes easier to arrange an enlarged drain hole than in the case of the first embodiment in which the five drain holes 220 are arranged in the shape of a cross.

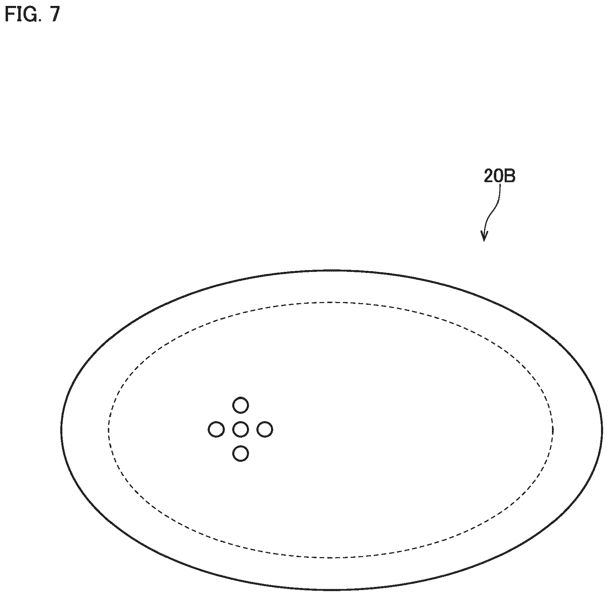

Fig. 7 is a top view of an organ placement base 20B according to another variation. In the example shown in Fig. 7, the organ placement base 20B has an elliptical outside shape when viewed from above. In this way, the shape of the organ placement base when viewed from above is not limited to a rectangular shape and may be any other shape such as an elliptical shape or a circular shape.

In the above-described embodiment, the tip end of each tube is connected directly to the artery or vein of the organ. Alternatively, each tube may be connected via a catheter to the artery or vein of the organ.

The organ preservation container 1 according to the above-described embodiment includes a plurality of tubes for supplying a liquid to the organ. Alternatively, the organ preservation container 1 may include only one tube for supplying a liquid to the organ. As another alternative, the organ preservation container 1 may include both types of tubes, i.e., a tube for supplying a liquid to the organ and a tube for draining a liquid out of the organ. Also, the organ preservation container 1 may include only a tube for draining a liquid out of the organ.

The configurations of the above-described preferred embodiment and variations may be appropriately combined as long as there are no mutual inconsistencies.

### [Reference Signs List]

1 organ preservation container
9 liver
10 container body
20, 20A, 20B organ placement base
21 base
22, 22A sheet
23, 23A region
220, 220A drain hole

## Claims

1. An organ placement base for placing an organ in vitro, the organ placement base comprising:
a base of a cylindrical shape extending vertically; and
a sheet made of a soft resin and covering an opening at a top of the base,
wherein the sheet has a drain hole that vertically penetrates the sheet.

2. The organ placement base according to claim 1, wherein
a value measured for the sheet by a type A durometer according to JIS K 6253 is less than or equal to A 70.

3. The organ placement base according to claim 1, wherein
the sheet sags 10 mm or more when a liver with a weight of 700 g is placed on a center of the sheet.

4. The organ placement base according to any one of claims 1 to 3, the organ placement base further comprising:
a plurality of drain holes, each being the drain hole,
the plurality of drain holes are arranged at a predetermined interval in a specific region of the sheet.

5. The organ placement base according to claim 4, wherein
the sheet has a length of greater than or equal to 250 mm in a longitudinal direction, and
the specific region is arranged on one side in the longitudinal direction of the center of the sheet.

6. The organ placement base according to claim 4 or 5, wherein
out of the plurality of drain holes, five drain holes are arranged in the shape of a cross in the specific region.

7. The organ placement base according to claim 4 or 5, wherein
out of the plurality of drain holes, nine drain holes are arranged at a regular interval in a matrix with three rows and three columns in the specific region.

8. An organ preservation container comprising:
the organ placement base according to any one of claims 1 to 7; and
a container body of a closed-end cylindrical shape in which the organ placement base is arranged.

9. An organ placement method for placing an organ removed from a body on an organ placement base,
the organ placement base including a base and a sheet, the base being of a cylindrical shape extending vertically, the sheet being made of a soft resin and covering an opening at a top of the base,
the organ placement method comprising:
a) arranging the organ placement base in an organ preservation container; and
b) placing the organ on the organ placement base,
wherein the sheet has a drain hole that vertically penetrates the sheet.

10. The organ placement method according to claim 9, wherein
the operation b) includes inserting a blood vessel of the organ into the drain hole.

11. The organ placement method according to claim 9, wherein
the sheet has a plurality of drain holes arranged at a predetermined interval and each being the drain hole,
the organ placement method further comprising:
c) before the operation b), removing a portion of the sheet that is located between adjacent drain holes out of the plurality of drain holes to form an enlarged drain hole that is larger than each of the plurality of drain holes,
wherein the operation b) includes inserting a blood vessel of the organ into the enlarged drain hole.
